# EUROPÄISCHE PATENTSCHRIFT

(11) **EP 2 868 942 B1**
(45) Veröffentlichungstag und Bekanntmachung des Hinweises auf die Patenterteilung: **15.06.2016**
(21) Anmeldenummer: 14185679.9
(22) Anmeldetag: 22.09.2014
(51) Int. Cl.: F16D 25/0638, F16D 13/56

(54) **Lamellen-Kupplungseinrichtung**
Multiplate clutch device
Dispositif d'embrayage à disques multiples

(30) Priorität: 21.10.2013 DE 102013221238
(43) Veröffentlichungstag der Anmeldung: 06.05.2015
(73) Patentinhaber: ZF Friedrichshafen AG, 88046 Friedrichshafen (DE)
(72) Erfinder: Jonckheere, Luc, 97440 Werneck (DE); Weidinger, Reinhold, 97509 Kolitzheim (DE); Eck, Andreas, 97469 Gochsheim (DE)

(56) Entgegenhaltungen:
- EP-A1- 1 226 992
- DE-A1- 10 151 654
- DE-A1- 10 301 405
- DE-A1-102008 032 273

## Beschreibung

Vorliegende Erfindung betrifft eine Lamellen-Kupplungseinrichtung, insbesondere eine nasslaufende Lamellen-Kupplungseinrichtungen für einen Kraftfahrzeug-Antriebsstrang, insbesondere für einen Antriebsstrang für Nutzkraftwagen, zur Momentenübertragung zwischen einem Ausgangselement einer Antriebseinheit und einem Getriebe des Antriebsstranges, umfassend eine erste Lamellen-Kupplungsanordnung, drehbar um die Drehachse A, wobei der ersten Lamellen-Kupplungsanordnung eine dazugehörige erste Getriebeeingangswelle mit einer Verzahnung zur Übertragung eines Moments von der ersten Lamellen-Kupplungsanordnung an die erste Getriebeeingangswelle zugeordnet ist, wobei die erste Getriebeeingangswelle mittels eines Pilotlagers an dem Ausgangselement der Antriebseinheit drehbar gelagert ist, wobei die erste Lamellen-Kupplungsanordnung vermittels einer zugehörigen Betätigungsanordnung betätigbar ist und wobei die erste Lamellen-Kupplungsanordnung mittels eines Flanschteils mit der Antriebseinheit in Verbindung steht, wobei die erste Lamellen-Kupplungsanordnung mittels eines ersten Lagers und eines zweiten Lagers, die axial voneinander beabstandet sind, an der ersten Getriebeeingangswelle radial und axial gelagert ist.

Solche Systeme sind als Stand der Technik bekannt, wie beispielsweise eine nasslaufende Mehrfach-Kupplungseinrichtung aus der EP 1 226 992 A1.

Dabei wird vornehmlich die Lamellenkupplungseinrichtung mittels Lager auf der Seite des Getriebes gelagert, wie beispielsweise in der DE 103 01 405 A1 offenbart. Aber auch aufgeteilte Lagerungen, wie in der DE 2006 010 707 A1 sind bekannt, in der ein Lager auf der Motorseite und ein Lager auf der Getriebeseite im Bereich einer dort platzierten Betätigungsanordnung positioniert ist.

Dadurch, dass ein Lager im Bereich der Betätigungsanordnung positioniert ist, kann es je nach Ausführungsform der Betätigungsanordnung zu erheblichen Platzproblemen kommen. Es müssen dann aufwendige Betätigungsanordnungen entwickelt werden, um die Lagerstelle für die Lamellen-Kupplung integrieren zu können. Weiter ist es oftmals bei Lamellen-Kupplungseinrichtungen für Nutzkraftwagen wegen der Bauteilgröße erforderlich, dass die Lamellen-Kupplungseinrichtung mittels zwei Lagern gelagert wird, um ein Kippmoment der Lamellen-Kupplung abzustützen. Auch hinsichtlich der Montage dieser Lamellen-Kupplungseinrichtung sind oftmals Lagerausführungen, die mittels zwei Lagern ausgeführt sind, schwer zu montieren, da sich ein Lager auf Motorseite und ein Lager auf Getriebeseite befindet. Um dies zu verhindern ist die erste Lamellen-Kupplungsanordnung mittels eines ersten Lagers und eines zweiten Lagers, die axial voneinander beabstandet sind, an der ersten Getriebeeingangswelle radial und axial gelagert.

Die DE 10 2008 032 273 A1 zeigt ebenfalls eine Lagerung einer Lamellen-Kupplungseinrichtung mit mehreren Lagern.

Es ist daher die Aufgabe der Erfindung eine Lamellen-Kupplungseinrichtung der angesprochenen Art bereitzustellen, die eine verbesserte Lagerung der Lamellen-Kupplungsanordnung gewährleistet, einen ausreichenden Bauraum für die Betätigungsanordnung bereit stellt, und einfach, schnell und damit kostengünstig zu montieren ist, sowie ein Montageverfahren für diese Lamellen-Kupplungseinrichtung in den Kraftfahrzeug Antriebsstrang bereitzustellen.

Zur Lösung dieser Aufgabe wird eine Lamellen- Kupplungseinrichtung mit den Merkmalen von Anspruch 1 vorgeschlagen. Dabei ist es vorteilhaft, wenn das eine Lager radiale Kräfte und das andere Lager radiale und axiale Kräfte aufnehmen kann, um eine Lagerüberbestimmung zu vermeiden. Vorteilhaft kann dies durch die Verwendung eines Nadellagers oder eines Rollenlagers für die radialen Kräfte und durch die Verwendung eines Schrägkugellagers oder Schulterkugellagers für radiale und axiale Kräfte erreicht werden. Es sind aber auch andere bekannte Lager möglich zu verwenden, die die genannten Kräfte aufnehmen können. Dabei kann das erste Lager als ein Radiallager oder als ein Axial- und Radiallager ausgeführt sein. Dies gilt auch für das zweite Lager. Durch die Lagerung der ersten Getriebeeingangswelle mittels des Pilotlagers an dem Ausgangselement der Antriebseinheit wird die erste Getriebeeingangswelle vorteilhaft gelagert, so dass Kippmomente abgestützt werden können. In einem Bereich zwischen dem Sitz des Pilotlagers und einer Verbindung einer Kupplungsnabe mit der Getriebeeingangswelle, vornehmlich durch eine Verzahnung, hier eine Steckverzahnung, drehfest verbunden, werden das erste Lager und das zweite Lager auf der ersten Getriebeeingangswelle positioniert. Dabei sind das erste Lager und das zweite Lager axial voneinander beabstandet. Die axiale Beabstandung wird vornehmlich durch ein Abstandselement zwischen einem Lageraußenring des ersten Lagers und einem Lageraußenring des zweiten Lagers ausgeführt. Dabei werden die beiden Lageraußenringe mittels zweier Sicherungselemente gegenüber dem Flanschteil axial gesichert. Dabei stützt sich das erste Lager mit einem Lagerinnenring an einem Absatz der ersten Getriebeeingangswelle in Richtung des Getriebes axial ab. Das zweite Lager stützt sich ebenfalls mit einem Lagerinnenring an einem Absatz an der ersten Getriebeeingangswelle in Richtung des Getriebes axial ab. In axialer Richtung zur Antriebseinheit wird das zweite Lager mit einem Sicherungsring an der ersten Getriebeeingangswelle gesichert. Dabei wird das Flanschteil vorteilhaft mit einer äußeren Steckverzahnung versehen, die in das Ausgangselement des Antriebselements eingreift. Dabei ist das Flanschteil drehfest mit einem Gehäuse der ersten Lamellen-Kupplungsanordnung verbunden. Dabei wird ein Drehmoment, das von der Antriebseinheit in das Flanschteil und damit in das Gehäuse der Lamellen Kupplung eingeleitet wird, über die Kupplungslamellen, die mittels einer Anpressplatte mit einer Anpresskraft von einer Membranfeder oder von einem angesteuerten Hebel beaufschlagt werden, an einen Innenlamellenträger weitergeleitet. Der Innenlamellenträger ist dabei wiederum drehfest oder bis zu einem gewissen Winkelgrad verdrehbar mit der ersten Getriebeeingangswelle, vornehmlich mittels einer Steckverzahnung, verbunden und leitet somit das Drehmoment an die erste Getriebeeingangswelle und damit an das Getriebe weiter. Weiter kann es sich bei der ersten Lamellen-Kupplungsanordnung um Kupplungsanordnungen handeln, die in einem Normalzustand, beispielsweise, wenn diese nicht von einer Betätigungsanordnung mit einer axialen Kraft beaufschlagt werden, ein Drehmoment übertragen können. Diese sogenannten "normaly closed" Kupplungen werden vornehmlich mittels einer Membranfeder, die zwischen einem Gehäusedeckel und der Anpressplatte so eingespannt ist, dass diese eine axiale Kraft auf die Lamellen ausübt, ausgeführt. Um bei diesem Kupplungstyp kein Drehmoment zu übertragen ist es notwendig, dass die Betätigungsanordnung die Membranfeder ausrückt. Dies kann dadurch geschehen, dass die Federzungen der Membranfeder durch die Betätigungsanordnung gezogen oder gedrückt werden. Dies richtet sich danach, ob es sich um eine gezogenen oder eine gedrückte Lamellen-Kupplung handelt.

Für den Fall, dass eine Lamellen-Kupplung verbaut ist, die in dem Normalzustand kein Drehmoment überträgt, eine sogenannte "normaly open" Kupplung, wird vornehmlich durch einen Hebel über die Betätigungsanordnung eine axiale Kraft auf die Anpressplatte und damit auf die Lamellen erzeugt, um ein Drehmoment übertragen zu können. Dabei kann die Betätigungsanordnung sowohl pneumatisch, als auch hydraulisch betrieben werden.

Weiterhin ist vorgesehen, dass das erste Lager und das zweite Lager zwischen dem Pilotlager und der Verzahnung der ersten Getriebeeingangswelle positioniert sind. Es ist besonders vorteilhaft, wenn der Abstand des ersten Lagers und des zweiten Lagers möglichst weit axial beabstandet ist, um eine möglichst gute Abstützung der ersten. Lamellen-Kupplungsanordnung gegen ein Kippen zu gewährleisten. Dabei sind die Lagerinnenringe des ersten und des zweiten Lagers drehfest mit der ersten Getriebeeingangswelle verbunden. Die Lageraußenringe des ersten und des zweiten Lagers sind dabei drehfest mit dem Flanschteil verbunden. In Abhängigkeit des vorhandenen Bauraumes kann die axiale Beabstandung des ersten Lagers und des zweiten Lagers gewählt werden.

Eine weitere günstige Ausführungsform sieht vor, dass das erste Lager radiale Kräfte und oder axiale Kräfte und das zweite Lager radiale Kräfte und oder axiale Kräfte aufnehmen kann. Dabei wird vornehmlich eine Ausführungsform Anwendung finden, bei der das eine Lager von den zwei Lagern axiale und radiale Kräfte aufnehmen kann und das andere Lager nur radiale Kräfte. Diese Ausführungsform ist besonders vorteilhaft, da dadurch eine Lagerüberbestimmung vermieden wird. Im Bedarfsfall können aber auch beide Lager axiale und radiale Kräfte aufnehmen.

In einer weiteren vorteilhaften Ausführungsform sind ein Lageraußenring des ersten Lagers und ein Lageraußenring des zweiten Lagers mit dem Flanschteil drehfest verbunden. Das Flanschteil bildet hier die Verbindung zwischen dem Ausgangselement der Antriebseinheit und der ersten Lamellen-Kupplungsanordnung. Dabei ist das Flanschteil vorteilhaft mit einem ersten Kupplungskorb der ersten Lamellen-Kupplungsanordnung drehfest, vorteilhaft mittels einer Niet-, Schweiß- oder Schraubverbindung, verbunden. Dies bietet den Vorteil, dass je nach axialer Beabstandung des ersten Lagers und des zweiten Lagers nicht der aufwendige erste Kupplungskorb geändert werden muss, sondern dass lediglich das einfacher gestaltete Flanschteil an den jeweiligen axialen Abstand des ersten und des zweiten Lagers angepasst werden muss. Natürlich kann das Flanschteil und der erste Kupplungskorb auch aus einem Bauteil gefertigt werden.

Auch kann es vorteilhaft sein, wenn ein Lagerinnenring des ersten Lagers und ein Lagerinnenring des zweiten Lagers mit der ersten Getriebeeingangswelle drehfest verbunden sind. Durch diese Ausführungsvariante kann eine möglichst optimale Lagerung der ersten Lamellen-Kupplungsanordnung an der ersten Getriebeeingangswelle gewährleistet werden. Auch die axiale Beabstandung kann durch eine entsprechende Kontur an der ersten Getriebeeingangswelle ausgeführt werden. Die drehfeste Verbindung der Lagerinnenringe des ersten und des zweiten Lagers wird vorteilhaft durch eine Presspassung gewährleistet.

In einer weiteren günstigen Ausführungsform können das erste Lager und das zweite Lager an dem Flanschteil und an der ersten Getriebeeingangswelle in zumindest einer axialen Richtung mittels zumindest eines Sicherungselements gesichert werden. Um die auftretenden axialen Kräfte, die vornehmlich von der ersten Lamellen-Kupplungsanordnung kommen und durch das Einkuppeln oder durch das Auskuppeln entstehen können, durch entweder das erste oder das zweite Lager aufzunehmen, sind das erste und das zweite Lager gegenüber der ersten Getriebeeingangswelle und gegenüber dem Flanschteil mittels Sicherungsringen zu sichern. Dies erfolgt vorteilhaft durch radiale Eindrehbereiche an der ersten Getriebeeingangswelle und an dem Flanschteil, in die die Sicherungselemente, vorteilhaft Seegerringe oder vergleichbare Sicherungsringe eingesetzt werden und damit eine axiale Bewegung der Lager zu der ersten Getriebeeingangswelle und dem Flanschteil verhindern.

Eine weitere vorteilhafte Ausführungsform sieht vor, dass die erste Lamellen-Kupplungsanordnung mittels eines Torsionsdämpfers, der eine Primärmasse und eine, gegen die Kraft eines Energiespeichers verdrehbare Sekundärmasse umfasst, mit dem Ausgangselement der Antriebseinheit in Verbindung steht. Durch die zusätzliche Verwendung des Torsionsdämpfers, kann ein noch besseres Schwingungsdämpfungsverhalten erzielt werden. Der Torsionsdämpfer kann dabei vorteilhaft mit seiner Primärmasse an dem Ausgangselement der Antriebseinheit, vorteilhaft mit einer Kurbelwelle, drehfest verbunden sein. Die Sekundärmasse ist dabei vorteilhaft mittels einer Steckverzahnung mit dem Flanschteil verbunden. Dies ist besonders günstig bei der Montage, da hier eine komplett vorgefertigte Einheit von Getriebe und Lamellen-Kupplung an die Antriebseinheit geschraubt oder gleichwertig befestigt werden kann. Das Flanschteil, das hier eine zur Primärmasse korrespondierende Steckverzahnung besitzt, wird bei der Montage in die Steckverzahnung der Sekundärmasse des Torsionsdämpfers eingeführt und somit eine drehfeste Verbindung zwischen der Sekundärmasse und dem Flanschteil erreicht. Dabei können sich die Primärmasse und die Sekundärmasse gegen einen Energiespeicher, vorteilhaft gegen eine Schraubenfeder, eine Bogenfeder oder ein vergleichbares Federelement, bis zu einem bestimmten Winkelgrad gegeneinander verdrehen. Dabei können als Torsionsdämpfer Systeme wie beispielsweise Zwei-Massen Systeme, alle bekannten Tilgersysteme, oder Systeme, die einen Phasenschieber in Kombination mit einem Koppelgetriebe enthalten, wie beispielsweise in DE 102011007118 offengelegt, oder vergleichbare Torsionsdämpfungssysteme .

Eine weitere Ausführungsvariante zu der voran beschriebenen Ausführungsform sieht vor, dass das Flanschteil und die Sekundärmasse des Torsionsdämpfers mittels einer Verzahnung drehfest miteinander verbunden sind. Die Verzahnung ist dabei vorteilhaft eine Steckverzahnung, wie bereits beschrieben, um eine leichte, schnelle und damit kostengünstige Montage zu erzielen und dennoch eine drehfeste Verbindung zu erreichen.

In einer weiteren vorteilhaften Ausführungsvariante stehen das erste Lager und das zweite Lager mit einem Kupplungsraum in Verbindung und werden mit einem, in dem Kupplungsraum vorhandenen viskosen Medium geschmiert. Die erste Lamellen-Kupplungsanordnung ist vorteilhaft eine nasslaufende Kupplung. Das bedeutet, dass in dem Raum, in dem sich die erste Lamellen-Kupplungsanordnung befindet, sich auch das viskose Medium, vorteilhaft ein Schmieröl oder ein vergleichbares Schmiermittel befindet. Dadurch, dass das erste Lager und das zweite Lager mit dem Kupplungsraum in Verbindung stehen, kann das Schmiermittel an das erste Lager und an das zweite Lager gelangen und dies mit dem Schmiermittel schmieren und auch am Lager entstehende Wärme aufnehmen und somit die Lager kühlen.

Eine weitere günstige Ausführungsform sieht vor, dass die erste Lamellen-Kupplungsanordnung mittels einer ersten Betätigungsanordnung, die pneumatisch oder hydraulisch oder elektromechanisch ausgeführt ist, betätigbar ist. Die Verwendung von hydraulischen oder pneumatischen Betätigungsanordnungen für die Kupplung ist besonders verbreitet, da sowohl hydraulische, als auch pneumatische Systeme in Kraftfahrzeugen vorhanden sind und diese mitgenutzt werden können. Vor allem im Bereich der Nutzkraftfahrzeuge sind pneumatische Betätigungsanordnungen verbreitet, da hier meist die Bremsanlage pneumatisch betätigt wird. Der Vorteil von einem pneumatischen System ist weiter, dass mögliche Leckagen die Betätigungsanordnung oder benachbarte Systeme nicht oder nur gering beeinträchtigen. Bei der Verwendung von hydraulischen Betätigungsanordnungen sind mögliche Leckagen bei nasslaufenden Kupplungssystemen ebenfalls vorteilhaft, da auch hier das Kupplungssystem nicht oder nur gering in seiner Funktion beeinträchtigt wird. Dabei können mit den hydraulischen oder pneumatischen Betätigungsanordnungen Lamellen-Kupplungsanordnungen betätigt werden, die eine gezogene und/oder eine gedrückte Funktionsweise aufweisen. Aber auch elektromechanische Betätigungsanordnungen bieten Vorteile, da diese zu einer Ansteuerung nur stromführende Kabel benötigen und somit vorteilhaft im Kraftfahrzeugantriebsstrang verbaut werden können.

Des Weiteren ist eine besonders vorteilhafte Ausführungsform dadurch gekennzeichnet, dass die Lamellen-Kupplungseinrichtung eine zweite Lamellen-Kupplungsanordnung mit einer dazugehörigen zweiten Getriebeeingangswelle und einer dazugehörigen zweiten Betätigungsanordnung umfasst, die konzentrisch zur Drehachse A angeordnet sind. Die Verwendung von zwei Lamellenkupplungen, die vorteilhaft axial überlappend angeordnet sind, sind dem Fachmann bekannt. Diese axial überlappend angeordnete Lamellen-Kupplungsanordnung ist, vor allem im Nutzkraftfahrzeugbereich, durch ein hohes Gewicht gekennzeichnet. Durch die Verwendung der in Anspruch 1 und den abhängigen Ansprüchen beschriebenen Lagerung kann die Lamellen-Kupplungsanordnung funktionssicher und platzsparend auf der ersten Getriebeeingangswelle gelagert werden.

Vorteilhaft zur vorangehenden Ausführungsform kann die zweite Betätigungsanordnung hydraulisch oder pneumatisch oder elektromechanisch ausgeführt sein. Die Vorteile ergeben sich auch hier, wie schon bei der Verwendung der ersten Betätigungseinrichtung, beschrieben.

Für eine Montage der vorangehend beschriebenen Lamellen-Kupplungseinrichtungen wird die erste Lamellen-Kupplungsanordnung oder die erste Lamellen- Kupplungsanordnung und die zweite Lamellen- Kupplungsanordnung, die mittels des ersten Lagers und des zweiten Lagers an der ersten Getriebeeingangswelle gelagert ist / sind, an dem Getriebe vormontiert, wobei axial zwischen der ersten Lamellenkupplungsanordnung oder der ersten Lamellenkupplungsanordnung und der zweiten Lamellen-Kupplungsanordnung und dem Getriebe die erste Betätigungsanordnung oder die erste und die zweite Betätigungsanordnung vormontiert sind. Dabei lagern das erste und das zweite Lager die erste Lamellen-Kupplungsanordnung oder die erste und die zweite Lamellen-Kupplungsanordnung in radialer und axialer Richtung an der ersten Getriebeeingangswelle. Durch die Montage der Lamellen-Kupplungseinrichtung an dem Getriebe entsteht eine kompakte Getriebe- Lamellen-Kupplungseinheit.

In einem weiteren vorteilhaften Verfahren zu dem bereits vorangegangenen Verfahren wird das Getriebe mit einem Getriebegehäuse an die Antriebseinheit befestigt, wobei das Flanschteil mittels einer Verzahnung mit dem Ausgangselement der Antriebseinheit oder mit dem Torsionsdämpfer verbunden wird. Dabei kann die Verzahnung vorteilhaft als eine gut zu montierende Steckverzahnung ausgeführt werden. Dies ist besonders vorteilhaft, da das mit der Lamellen-Kupplungsanordnung vormontierte Getriebe, leicht mit der Antriebseinheit zu verbinden ist. Das Drehmoment der Antriebseinheit wird durch die Verzahnung von dem Ausgangselement der Antriebseinheit oder von dem Torsionsdämpfer in das Flanschteil und damit in die erste und oder in die zweite Lamellen-Kupplungsanordnung geleitet. Dabei wird das Getriebe mit der Antriebseinheit vorteilhaft im radial äußeren Bereich mittels einer Schraubverbindung drehfest miteinander verbunden.

In einer weiteren vorteilhaften Montagevariante kann zwischen dem Getriebe und der Antriebseinheit ein Gehäuseelement positioniert sein, das an einem radial inneren Umfangsbereich ein Dichtelement aufnimmt. Dabei wird das Gehäuseelement vorteilhaft zuerst an das Getriebe vormontiert. Das mit dem Gehäuseelement vormontierte Getriebe wird danach vorteilhaft mittels einer Schraubverbindung drehfest mit der Antriebseinheit und dem Getriebe verbunden. Das radial innen an dem Gehäuseelement angeordnete Dichtelement wird vorteilhaft als ein Radialwellendichtring ausgeführt. Dieser Radialwellendichtring dichtet auf dem Flanschteil den Antriebsraum von dem Kupplungsraum ab. Dies ist besonders vorteilhaft, wenn der Kupplungsraum als ein Nassraum mit viskosem Medium ausgeführt ist und der Antriebsraum einen Trockenraum bildet.

Im Folgenden soll die Erfindung anhand von beispielhaften, in den Figuren dargestellten Ausführungsbeispielen näher beschrieben werden. Dabei sind die gezeigten Ausführungsbeispiele rein exemplarischer Natur und legen nicht den Rahmen der Erfindung fest. Dieser wird allein durch die anhängigen Ansprüche definiert.

Es zeigen:
Figur 1: eine Darstellung einer Lamellen-Kupplungseinrichtung mit einer ersten Lamellen-Kupplungsanordnung und einem Torsionsdämpfer,
Figur 2: eine Schnittdarstellung einer Lamellen-Kupplungseinrichtung mit einer ersten Lamellen-Kupplungsanordnung,
Figur 3: eine Schnittdarstellung einer Lamellen-Kupplungseinrichtung mit einer ersten und einer zweiten Lamellen-Kupplungsanordnung.

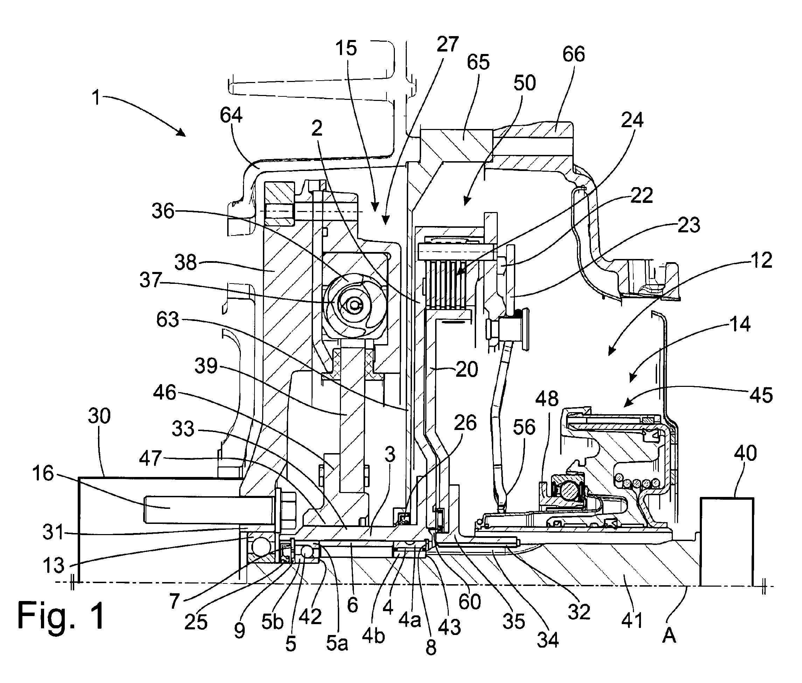

Die Figur 1 zeigt eine Darstellung einer Lamellen-Kupplungseinrichtung 1 mit einer ersten Lamellen-Kupplungsanordnung 50 und einem Torsionsdämpfer 15. Dabei ist der Torsionsdämpfer 15 mit einer Primärmasse 38 und einer, gegen einen Energiespeicher 36, hier durch eine Schraubenfeder 37ausgeführt, verdrehbaren Sekundärmasse 39 ausgestaltet. Die Primärmasse 38 ist dabei drehfest mittels einer Kurbelwellenschraube16 an einer Kurbelwelle, hier nicht dargestellt, einer Antriebseinheit 30 befestigt. Die Sekundärmasse 39 ist hier drehfest mit einem Ringteil 46 verbunden. Das Ringteil 46 ist radial innen mit einer Steckverzahnung 47ausgeführt, in die eine korrespondierende Steckverzahnung 33 eines Flanschteiles 3 eingeführt ist. Das Flanschteil 3 ist hier drehfest mit einem Eingangsteil 2 der ersten Lamellen-Kupplungsanordnung 50 verbunden. Hier nicht abgebildet, kann aber auch das Flanschteil 3 und das Eingangsteil 2 als ein einziges Bauteil ausgeführt werden. Über die Kupplungslamellen 24, die über eine Membranfeder 23 und eine Anpressplatte 22 mit einer axialen Kraft beaufschlagt werden, wird ein Drehmoment, das von der Antriebseinheit 30 über den Torsionsdämpfer 15 in das Eingangsteil der ersten Lamellen-Kupplungsanordnung 50 geleitet wird, an einen Innenlamellenträger 20 weiter geleitet. Der Innenlamellenträger 20 ist hier drehfest mit einer Kupplungsnabe 35 verbunden, die radial innen eine Steckverzahnung 32 aufweist. Hier nicht dargestellt, kann aber ebenfalls der Innenlamellenträger 20 und die Kupplungsnabe 35 als ein Bauteil ausgeführt sein. Mittels einer korrespondierenden Steckverzahnung 34 auf einer ersten Getriebeeingangswelle 41 wird das Drehmoment mittels der ersten Getriebeeingangswelle 41 in das Getriebe 40 eingeleitet. Die Ansteuerung der ersten Lamellen-Kupplungsanordnung 50 erfolgt hier durch eine erste Betätigungsanordnung 45, die hydraulisch oder pneumatisch oder elektromechanisch betrieben werden kann. Die hier gezeigte erste Lamellen-Kupplungsanordnung 50 ist in einem Normalzustand geschlossen. Dies bedeutet, dass die Membranfeder 23 so eingebaut ist, dass immer eine axiale Kraft auf die Kupplungslamellen 24 wirkt. Für den Fall, dass die erste Lamellen-Kupplungsanordnung 50 geöffnet werden soll, also für den Fall, dass kein Drehmoment übertragen werden soll, fährt hier die erste Betätigungsanordnung 45 in axiale Richtung zur Antriebseinheit 30 und drückt mit einem Ausrückring 48 auf einen radial inneren Bereich 56 der Membranfeder 23. Durch eine Hebelwirkung hebt die Membranfeder 23 radial außen von der Anpressplatte 22 ab und die Kupplungslamellen 24 werden mit keiner axialen Kraft mehr beaufschlagt. Hier nicht dargestellt, kann aber auch eine sogenannte gezogene erste Lamellen-Kupplungsanordnung verbaut werden. Dazu müsste, damit die erste gezogene Lamellen-Kupplung kein Drehmoment mehr überträgt, die Betätigungsanordnung eine Membranfeder der gezogenen ersten Lamellen-Kupplungsanordnung in eine axial entgegengesetzte Richtung ziehen, als für die, in Figur 1 beschriebene Richtung.

Die erste Lamellen-Kupplungsanordnung 50 ist dabei mittels eines ersten Lagers 4 und eines zweiten Lagers 5 gegenüber der ersten Getriebeeingangswelle 41 drehbar gelagert. Dazu ist es vorteilhaft, dass die erste Getriebeeingangswelle 41 an ihrem Ende das zur Antriebseinheit 30 zeigt, mittels eines Pilotlagers 13 gegenüber einem Ausgangselement 31 der Antriebseinheit 30, hier in Form der Primärmasse 38 gebildet, gelagert ist. Die erste Getriebeeingangswelle 41, die an ihrem anderen Ende im Getriebe 40 gelagert ist, wird durch diese Lagerung vorteilhaft gelagert. Zur Lagerung der erste Lamellen-Kupplungsanordnung 50 gegenüber der ersten Getriebeeingangswelle 41 mittels der zwei Lager 4 und 5 ist es vorteilhaft, die Lager 4 und 5 möglichst axial weit voneinander beabstandet auf der Getriebeeingangswelle 41 zu positionieren. Diese Ausführungsform stützt ein Kippmoment, das von der ersten Lamellen-Kupplungsanordnung 50 kommt vorteilhaft ab und ist besonders vorteilhaft bei schweren Lamellen-Kupplungen, wie sie bei Nutzkraftwagen verwendet werden. Die Lagerung erfolgt hier in der Form, dass die Lager 4 und 5 mit ihren jeweiligen Lageraußenringen 4a und 5a möglichst weit axial voneinander beabstandet an einer radialen Innenfläche des Flanschteiles 3 positioniert werden. Dabei verhindern die Sicherungselemente 7 und 8, dass sich die Lageraußenringe 4a und 5a gegenüber dem Flanschteil 3 axiale verschieben können. Dabei verhindert ein Abstandselement 6, dass sich die Lageraußenringe 4a und 5a zueinander axial verschieben können. Ein Lagerinnenring 4b des ersten Lagers 4 ist auf der ersten Getriebeeingangswelle 41, in axialer Richtung von der Antriebseinheit 30 gesehen, vor der Steckverzahnung 34 der ersten Getriebeeingangswelle 41 für den Innenlamellenträger 20 positioniert. Ein Absatz 43 auf der ersten Getriebeeingangswelle 41 vor der Steckverzahnung 34 bildet für den Lagerinnenring 4b einen axialen Anschlag in Richtung des Getriebes 40. Ein weiterer Absatz 42 auf der ersten Getriebeeingangswelle 41 bildet einen axialen Anschlag für den Lagerinnenring 5b des zweiten Lagers 5 in axialer Richtung des Getriebes 40. In Richtung der Antriebseinheit 30 wird der Lagerinnenring 5b durch einen Sicherungsring 9 axial gesichert. Durch ein Dichtelement 25, das hier als ein Radialwellendichtring ausgeführt ist und in axialer Richtung zur Antriebseinheit 30 nach dem zweiten Lager 5 zwischen der ersten Getriebeeingangswelle 41 und dem Flanschteil 3 positioniert ist, sowie durch ein Dichtelement 26, das hier ebenfalls als ein Radialwellendichtring ausgeführt ist und zwischen einer radialen Innenfläche eines Gehäuseelements 65 und des Flanschteils 3 positioniert ist. Dabei ist das Gehäuseelement 65 zwischen einem Antriebsgehäuse 64 und einem Getriebegehäuse 66 positioniert. Ein Erweiterungsbereich 63 des Gehäuseelements 65 nach radial innen trennt einen Antriebsraum 27, in dem hier der Torsionsdämpfer 15 aufgenommen ist, von dem Kupplungsraum 12, der hier ein viskoses Medium 14 wie Öl oder Fett umfassen kann, ab. Hier nicht dargestellt, so kann aber der Torsionsdämpfer 15 auch in dem Kupplungsraum 12 positioniert sein oder ebenso mit dem Innenlamellenträger 20 integriert sein. Die Dichtelemente 25 und 26 sorgen dafür, dass kein viskoses Medium 14 von dem Kupplungsraum 12 in den Antriebsraum 27 gelangen kann. Durch einen Öffnungsbereich 60 kann aber das viskose Medium 14 von dem Kupplungsraum 12 zu den Lagern 4 und 5 gelangen und diese mit dem viskosen Medium 14 versorgen. Dabei handelt es sich hier bei dem ersten Lager 4 um ein Rollenlager, das keine axialen Kräfte, sondern nur radiale Kräfte aufnehmen kann und bei dem zweiten Lager 5 um ein Schrägkugellager, das sowohl radiale, als auch axiale Kräfte aufnehmen kann. Dabei ist aber die hier abgebildete Position des Schrägkugellagers und des Rollenlagers nicht zwingend. Die Positionen können auch vertauscht werden und es können auch andere Lagertypen verwendet werden. Dabei soll aber zumindest ein Lagertyp so ausgewählt werden, dass dieses Lager sowohl radiale, als auch axiale Kräfte aufnehmen kann. Durch die Lageranordnung von Lager 4 und 5 ist gewährleistet, dass die erste Lamellen-Kupplungsanordnung 50 mit einem möglichst geringen Kippmoment auf der ersten Getriebeeingangswelle 41 gelagert ist. Ein weiterer Vorteil dieser Lageranordnung ist, dass im Bereich der ersten Betätigungsanordnung 45 kein Lager zur Abstützung der ersten Lamellen-Kupplungsanordnung 50 vorgesehen werden muss, so dass für die erste Betätigungsanordnung 45 ausreichend Bauraum zur Verfügung steht. Dies ist besonders Vorteilhaft, wenn zusätzliche Lamellen-Kupplungsanordnungen verwendet werden, bei denen die Betätigungsanordnung mehr Bauraum benötigt.

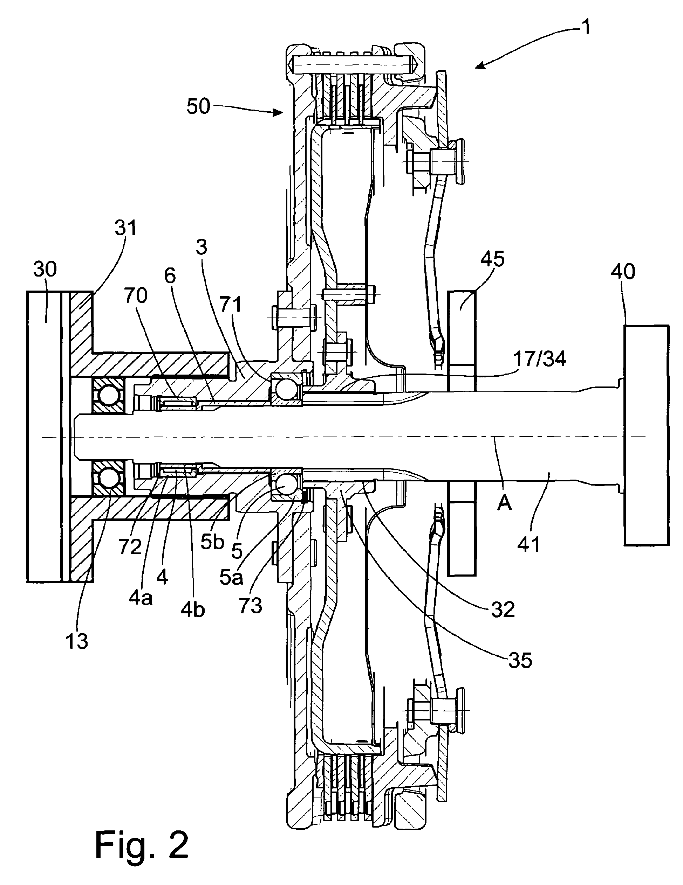

Die Figur 2 zeigt eine Schnittdarstellung einer Lamellen-Kupplungseinrichtung 1 mit einer ersten Lamellen-Kupplungsanordnung 50, ähnlich wie sie in Figur 1 bereits beschrieben wurde. Der Unterschied besteht in der Lageranordnung zur Abstützung der ersten Lamellen-Kupplungsanordnung 50 an der Getriebeeingangswelle 41. In Figur 2 ist das erste Lager 4, das hier als ein Rollenlager bzw. Nadellager ausgeführt ist und nur radiale Kräfte aufnehmen kann, in axialer Richtung von der Antriebseinheit 30 zum dem Getriebe 40 gesehen, auf der Seite der Antriebseinheit 30 positioniert. Mit einer axialen Beabstandung in Richtung des Getriebes 40 ist das zweite Lager 5, das hier als ein Schrägkugellager bzw. ein Schulterkugellager ausgeführt ist, positioniert. Dabei sind die Lager 4 und 5 mit ihrem jeweiligen Außenringen 4a und 5a an dem Flanschteil 3 positioniert. Das Flanschteil 3 ist von seiner Funktion wie unter der Figur 1 bereits beschrieben. Die axiale Beabstandung des Lageraußenringes 4a zu dem Lageraußenring 5a wird durch einen Absatz 70 und einen Absatz 71 an dem Flanschteil 3 erreicht. Eine axiale Sicherung des Lageraußenringes 4a in Richtung der Antriebseinheit 30 wird durch einen Sicherungsring 72 erreicht, der in einer Nut in dem Flanschteil 3 sitzt. Eine axiale Sicherung des Lageraußenringes 5a in axialer Richtung des Getriebes wird ebenfalls durch einen Sicherungsring 73 erreicht, der hier ebenfalls in einer Nut des Flanschteiles 3 sitzt. Die Lagerinnenringe 4b und 5b werden durch ein Abstandselement 6 voneinander beabstandet. Die Lagerinnenringe 4b und 5b sind dabei auf der Getriebeeingangswelle 41 positioniert. Durch diese Ausführungsvariante ist die erste Lamellen-Kupplungsanordnung 50 an der Getriebeeingangswelle 41 radial und axial gelagert. Dabei wird, hier nicht dargestellt, ebenfalls, wie bereits unter Figur 1 beschrieben, die Getriebeeingangswelle 41 an ihrem Endbereich, das zur Antriebseinheit zeigt, an einem Ausgangselement 31, vorteilhaft eine Kurbelwelle, mittels eines Pilotlagers 13 gelagert. Das andere Ende der Getriebeeingangswelle 41 ist, als bekannte Ausführung, im Getriebe gelagert und ermöglicht dadurch eine vorteilhafte Lagerung der Getriebeeingangswelle 41. Auch hier wird die erste Lamellen-Kupplungsanordnung 50 mittels der ersten Betätigungsanordnung 45 eingekuppelt und ausgekuppelt. Das Drehmoment, welches von der Antriebseinheit 30 in die erste Lamellen-Kupplungsanordnung 50 eingeleitet wird, wird mittels einer Kupplungsnabe 35 mit einer radial innen angeordneten Steckverzahnung 32 an die Getriebeeingangswelle 41, die ebenfalls eine Verzahnung 17, hier als korrespondierende Steckverzahnung 34 ausgeführt ist, und damit an das Getriebe 40 weitergeleitet. Die weitere Ausgestaltung entspricht der bereits in Figur 1 beschriebenen Ausführungsform.

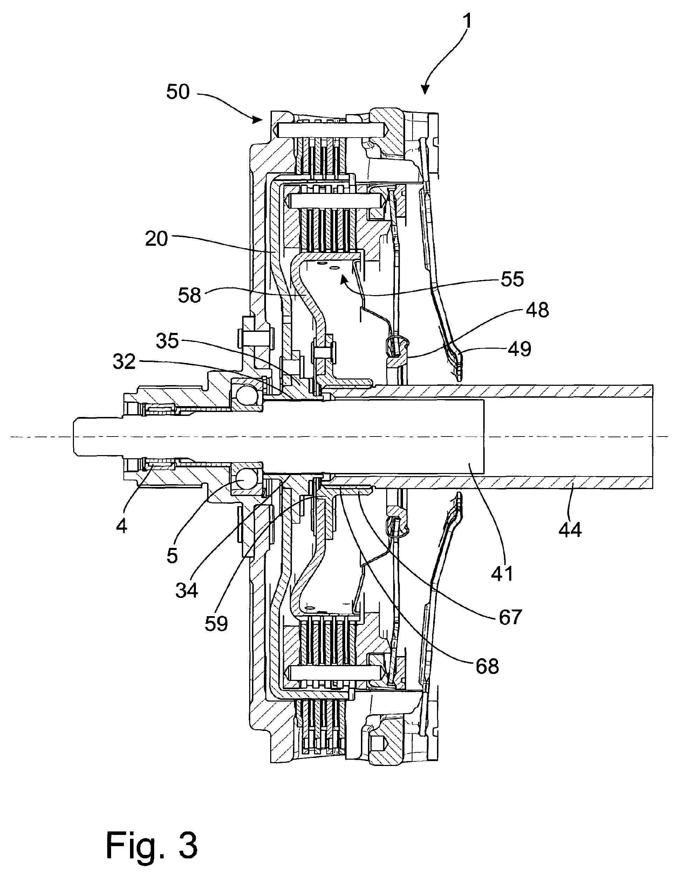

Figur 3 zeigt eine Schnittdarstellung einer Lamellen-Kupplungseinrichtung 1 mit einer ersten und einer zweiten Lamellen-Kupplungsanordnung 50; 55. Dabei sind die beiden Lamellen-Kupplungsanordnungen 50; 55 axiale überlappen ineinander geschachtelt, so dass sich ein kompakter Bauraum ergibt. Hier nicht dargestellt, so können die erste Lamellen-Kupplungsanordnung 50 und die zweite Lamellen-Kupplungsanordnung 55 axial gestaffelt angeordnet sein. Die Lagerung der beiden Lamellen-Kupplungsanordnungen 55; 55 erfolgt mit einem ersten Lager 4 und einem zweiten Lager 5 an der Getriebeeingangswelle 41, wie bereits unter der Figur 2 beschrieben. Durch die Verwendung der erste Lamellen-Kupplungsanordnung 50 und der zweite Lamellen-Kupplungsanordnung 55 wird das Drehmoment wahlweise von der ersten Lamellen-Kupplungsanordnung 50 über einen Innenlamellenträger 20 und eine damit drehfest verbundenen, vorteilhaft mittels einer Nietverbindung, Kupplungsnabe 35 an die Getriebeeingangswelle 41, die vorteilhaft mittels einer jeweiligen Steckverzahnung 32; 43 drehfest miteinander verbunden sind, oder von der zweiten Lamellen-Kupplungsanordnung 55 über einen Innenlamellenträger 58, der drehfest, vorteilhaft mittels einer Nietverbindung, mit einer Kupplungsnabe 59 verbunden ist, an eine zweite Getriebeeingangswelle 44, die ebenfalls vorteilhaft mittels einer jeweiligen Steckverzahnung 67; 68 drehfest miteinander verbunden sind ,geleitet. Dabei ist die zweite Getriebeeingangswelle 44 konzentrisch außerhalb der Getriebeeingangswelle 41 positioniert. Durch die Verwendung der bereits unter Figur 1 ausführlich beschriebenen Lagerung für die Lamellen-Kupplungsanordnung, kann auch vorteilhaft bei der Verwendung von zwei Lamellen-Kupplungsanordnungen 50; 55 ein Bauraum auf der Seite, auf der die Betätigungseinrichtung positioniert ist, gewonnen werden. Auch hier erfolgt die Lagerung der beiden Lamellen-Kupplungsanordnungen 50; 55 auf der ersten Getriebeeingangswelle 41 und bildet damit eine kompakte Einheit, die auch bei einer späteren Montage mit einer Antriebseinheit, hier nicht dargestellt, Vorteile durch eine leichtere und schnellere Montage bietet. Ebenfalls vorteilhaft ist diese Anordnung bei der Demontage zu sehen. Die Betätigung der ersten und der zweiten Lamellen-Kupplungsanordnungen 50; 55 erfolgt über einen ersten Ausrückring 48 und einen zweiten Ausrückring 51. Die Betätigungseinrichtung hierzu ist in dieser Figur nicht dargestellt.

### Bezugszeichen

- 1: Lamellen-Kupplungseinrichtung
- 2: Eingangsteil
- 3: Flanschteil
- 4: erstes Lager
- 4a: Lageraußenring
- 4b: Lagerinnenring
- 5: zweites Lager
- 5a: Lageraußenring
- 5b: Lagerinnenring
- 6: Abstandselement
- 7: Sicherungselement
- 8: Sicherungselement
- 9: Sicherungselement
- 10: Absatz
- 11: Spaltbereich
- 12: Kupplungsraum
- 13: Pilotlager
- 14: viskoses Medium
- 15: Torsionsdämpfer
- 16: Kurbelwellenschraube
- 17: Verzahnung
- 18: erster Kupplungskorb
- 19: Gehäuse
- 20: Innenlamellenträger
- 21: Gehäusedeckel
- 22: Anpressplatte
- 23: Membranfeder
- 24: Kupplungslamellen
- 25: Dichtelement
- 26: Dichtelement
- 27: Antriebsraum
- 30: Antriebseinheit
- 31: Ausgangselement
- 32: Steckverzahnung
- 33: Steckverzahnung
- 34: Steckverzahnung
- 35: Kupplungsnabe
- 36: Energiespeicher
- 37: Schraubenfeder
- 38: Primärmasse
- 39: Sekundärmasse
- 40: Getriebe
- 41: erste Getriebeeingangswelle
- 42: Absatz
- 43: Absatz
- 44: zweite Getriebeeingangswelle
- 45: erste Betätigungsanordnung
- 46: Ringteil
- 47: Steckverzahnung
- 48: erster Ausrückring
- 49: zweite Betätigungsanordnung
- 51: zweiter Ausrückring
- 50: erste Lamellen-Kupplungsanordnung
- 55: zweite Lamellen-Kupplungsanordnung
- 58: Innenlamellenträger
- 59: Kupplungsnabe
- 60: Öffnungsbereich
- 63: Erweiterungsbereich
- 64: Antriebsgehäuse
- 65: Gehäuselement
- 66: Getriebegehäuse
- 67: Steckverzahnung
- 68: Steckverzahnung
- 70: Absatz
- 71: Absatz
- 72: Sicherungsring
- 73: Sicherungsring

## Patentansprüche

1. Lamellen-Kupplungseinrichtung (1), insbesondere nasslaufende Lamellen-Kupplungseinrichtungen, für einen Kraftfahrzeug-Antriebsstrang zur Momentenübertragung zwischen einem Ausgangselement (31) einer Antriebseinheit (30) und einem Getriebe (40) des Antriebsstranges, umfassend eine erste Lamellen-Kupplungsanordnung (50), drehbar um eine Drehachse A, wobei der ersten Lamellen-Kupplungsanordnung (50) eine dazugehörige erste Getriebeeingangswelle (41) mit einer Verzahnung (17) zur Übertragung eines Moments von der ersten Lamellen-Kupplungsanordnung (50) an die erste Getriebeeingangswelle (41) zugeordnet ist, wobei die erste Getriebeeingangswelle (41) mittels eines Pilotlagers (13) an dem Ausgangselement (31) der Antriebseinheit (30) drehbar gelagert ist, wobei die erste Lamellen-Kupplungsanordnung (50) vermittels einer zugehörigen ersten Betätigungsanordnung (45) betätigbar ist und wobei die erste Lamellen-Kupplungsanordnung (50) mittels eines Flanschteils (3) mit der Antriebseinheit (30) drehfest in Verbindung steht wobei die erste Lamellen-Kupplungsanordnung (50) mittels eines ersten Lagers (4) und eines zweiten Lagers (5), die axial voneinander beabstandet sind, an der ersten Getriebeeingangswelle (41) radial und axial gelagert ist, **dadurch gekennzeichnet, dass** das erste Lager (4) und das zweite Lager (5) in axialer Richtung zwischen dem Pilotlager (13) und der Verzahnung (17) der ersten Getriebeeingangswelle (41) positioniert sind.

2. Lamellen-Kupplungseinrichtung (1) nach Anspruch 1, **dadurch gekennzeichnet, dass** das erste Lager (4) radiale Kräfte und / oder axiale Kräfte und das zweite Lager (5) radiale Kräfte und / oder axiale Kräfte aufnehmen kann.

3. Lamellen-Kupplungseinrichtung (1) nach einem der vorhergehenden Ansprüche, **dadurch gekennzeichnet, dass** ein Lageraußenring 4a des ersten Lagers (4) und ein Lageraußenring 5a des zweiten Lagers (5) mit dem Flanschteil 3 drehfest verbunden sind.

4. Lamellen-Kupplungseinrichtung (1) nach einem der vorhergehenden Ansprüche, **dadurch gekennzeichnet, dass** ein Lagerinnenring 4b des ersten Lagers (4) und ein Lagerinnenring 5b des zweiten Lagers (5) mit der ersten Getriebeeingangswelle (41) drehfest verbunden sind.

5. Lamellen-Kupplungseinrichtung (1) nach einem der vorhergehenden Ansprüche, **dadurch gekennzeichnet, dass** das erste Lager 4 und das zweite Lager 5 an dem Flanschteil 3 und an der ersten Getriebeeingangswelle (41) in zumindest einer axialen Richtung mittels zumindest eines Sicherungselements (7; 8; 9) gesichert sind.

6. Lamellen-Kupplungseinrichtung (1) nach einem der vorhergehenden Ansprüche, **dadurch gekennzeichnet, dass** die erste Lamellen-Kupplungsanordnung (50) mittels eines Torsionsdämpfers (15), der eine Primärmasse (38) und eine, gegen die Kraft eines Energiespeichers (36) verdrehbare Sekundärmasse (39) umfasst, mit dem Ausgangselement (31) der Antriebseinheit (30) in Verbindung steht.

7. Lamellen-Kupplungseinrichtung (1) nach Anspruch 6, **dadurch gekennzeichnet, dass** das Flanschteil (3) und die Sekundärmasse (39) des Torsionsdämpfers (15) mittels einer Verzahnung (47) drehfest miteinander verbunden sind.

8. Lamellen-Kupplungseinrichtung (1) nach einem der vorhergehenden Ansprüche, **dadurch gekennzeichnet, dass** das erste Lager (4) und das zweite Lager (5) mit einem Kupplungsraum (12) in Verbindung stehen und mit einem, in dem Kupplungsraum (12) vorhandenen viskoses Medium (14) geschmiert werden.

9. Lamellen-Kupplungseinrichtung (1) nach einem der vorhergehenden Ansprüche, **dadurch gekennzeichnet, dass** die erste Lamellen-Kupplungsanordnung (50) mittels einer ersten Betätigungsanordnung (45), die pneumatisch oder hydraulisch oder elektromechanisch ausgeführt ist, betätigbar ist.

10. Lamellen-Kupplungseinrichtung (1) nach einem der vorhergehenden Ansprüche, **dadurch gekennzeichnet, dass** die Lamellen-Kupplungseinrichtung (1) eine zweite Lamellen-Kupplungsanordnung (55) mit einer dazugehörigen zweiten Getriebeeingangswelle (44) und einer dazugehörigen zweiten Betätigungsanordnung (49) umfasst, die konzentrisch zur Drehachse A angeordnet sind.

11. Lamellen-Kupplungseinrichtung (1) nach Anspruch 10, **dadurch gekennzeichnet, dass** die zweite Betätigungsanordnung (49) hydraulisch oder pneumatisch oder elektromechanisch ausgeführt ist.

12. Verfahren zur Montage einer, nach einem der Ansprüche 1 bis 11 beanspruchten Lamellen-Kupplungseinrichtung (1) in einem Antriebsstrang, insbesondere in einen Antriebsstrang eines Nutzkraftwagens, **dadurch gekennzeichnet, dass** die erste Lamellen-Kupplungsanordnung (50) oder die erste Lamellen- Kupplungsanordnung (50) und die zweite Lamellen- Kupplungsanordnung (55), die mittels des ersten Lagers (4) und des zweiten Lagers (5) an der ersten Getriebeeingangswelle (41) gelagert ist/sind, an dem Getriebe (40) vormontiert ist, wobei axial zwischen der ersten Lamellenkupplungsanordnung (50) oder der ersten Lamellenkupplungsanordnung (50) und der zweiten Lamellen-Kupplungsanordnung (50;55) und dem Getriebe (40) die erste Betätigungsanordnung (45) oder die erste und die zweite Betätigungsanordnung (45; 49) vormontiert sind.

13. Verfahren zur Montage einer Lamellen-Kupplungseinrichtung (1) nach Anspruch 12, **dadurch gekennzeichnet, dass** das Getriebe (40) mit einem Getriebegehäuse (66) an die Antriebseinheit (30) befestigt wird, wobei das Flanschteil (3) mittels einer Verzahnung (47) mit dem Ausgangselement (31) der Antriebseinheit (30) oder mit dem Torsionsdämpfer (15) verbunden wird.

14. Verfahren zur Montage einer Lamellen-Kupplungseinrichtung (1) nach Anspruch 13, **dadurch gekennzeichnet, dass** das Getriebegehäuse (66) mittels eines Gehäuseelementes (65) an die Antriebseinheit (30) befestigt wird und das Gehäuseelement (65) an einem radial inneren Umfangsbereich ein Dichtelement (26) aufnimmt.

## Claims

1. Multiplate clutch device (1), in particular wet-running multiplate clutch devices, for a motor vehicle drivetrain for transmitting torque between an output element (31) of a drive unit (30) and a gearbox (40) of the drivetrain, comprising a first multiplate clutch arrangement (50) rotatable about an axis of rotation A, wherein the first multiplate clutch arrangement (50) is assigned an associated first gearbox input shaft (41) with a toothing (17) for transmitting a torque from the first multiplate clutch arrangement (50) to the first gearbox input shaft (41), wherein the first gearbox input shaft (41) is rotatably mounted by way of a pilot bearing (13) on the output element (31) of the drive unit (30), wherein the first multiplate clutch arrangement (50) can be actuated by way of an associated first actuation arrangement (45), and wherein the first multiplate clutch arrangement (50) is connected rotationally conjointly by way of a flange part (3) to the drive unit (30), wherein the first multiplate clutch arrangement (50) is mounted radially and axially on the first gearbox input shaft (41) by way of a first bearing (4) and a second bearing (5) which are spaced apart from one another axially, **characterized in that** the first bearing (4) and the second bearing (5) are positioned in an axial direction between the pilot bearing (13) and the toothing (17) of the first gearbox input shaft (41).

2. Multiplate clutch device (1) according to Claim 1, **characterized in that** the first bearing (4) can accommodate radial forces and/or axial forces, and the second bearing (5) can accommodate radial forces and/or axial forces.

3. Multiplate clutch device (1) according to one of the preceding claims, **characterized in that** a bearing outer ring (4a) of the first bearing (4) and a bearing outer ring (5a) of the second bearing (5) are connected rotationally conjointly to the flange part (3).

4. Multiplate clutch device (1) according to one of the preceding claims, **characterized in that** a bearing inner ring (4b) of the first bearing (4) and a bearing inner ring (5b) of the second bearing (5) are connected rotationally conjointly to the first gearbox input shaft (41).

5. Multiplate clutch device (1) according to one of the preceding claims, **characterized in that** the first bearing (4) and the second bearing (5) are secured on the flange part (3) and on the first gearbox input shaft (41) in at least one axial direction by way of at least one securing element (7; 8; 9).

6. Multiplate clutch device (1) according to one of the preceding claims, **characterized in that** that the first multiplate clutch arrangement (50) is connected to the output element (31) of the drive unit (30) by way of a torsion damper (15), which torsion damper comprises a primary mass (38) and a secondary mass (39) which is rotatable counter to the force of an energy store (36).

7. Multiplate clutch device (1) according to Claim 6, **characterized in that** the flange part (3) and the secondary mass (39) of the torsion damper (15) are connected rotationally conjointly to one another by way of a toothing (47).

8. Multiplate clutch device (1) according to one of the preceding claims, **characterized in that** the first bearing (4) and the second bearing (5) are connected to a clutch chamber (12), and are lubricated by way of a viscous medium (14) which is present in the clutch chamber (12).

9. Multiplate clutch device (1) according to one of the preceding claims, **characterized in that** the first multiplate clutch arrangement (50) can be actuated by way of a first actuation arrangement (45) which is of pneumatic or hydraulic or electromechanical design.

10. Multiplate clutch device (1) according to one of the preceding claims, **characterized in that** the multiplate clutch device (1) comprises a second multiplate clutch arrangement (55) with an associated second gearbox input shaft (44) and with an associated second actuation arrangement (49), which are arranged concentrically with respect to the axis of rotation A.

11. Multiplate clutch device (1) according to Claim 10, **characterized in that** the second actuation arrangement (49) is of hydraulic or pneumatic or electromechanical design.

12. Method for installing a multiplate clutch device (1), claimed according to one of Claims 1 to 11, in a drivetrain, in particular in a drivetrain of a utility motor vehicle, **characterized in that** the first multiplate clutch arrangement (50), or the first multiplate clutch arrangement (50) and the second multiplate clutch arrangement (55), which is/are mounted on the first gearbox input shaft (41) by way of the first bearing (4) and by way of the second bearing (5), is pre-installed on the gearbox (40), wherein the first actuation arrangement (45), or the first and the second actuation arrangement (45; 49), are pre-installed axially between the first multiplate clutch arrangement (50), or the first multiplate clutch arrangement (50) and the second multiplate clutch arrangement (50; 55), and the gearbox (40).

13. Method for installing a multiplate clutch device (1) according to Claim 12, **characterized in that** the gearbox (40) is fastened by way of a gearbox housing (66) to the drive unit (30), wherein the flange part (3) is connected by way of a toothing (47) to the output element (31) of the drive unit (30) or to the torsion damper (15).

14. Method for installing a multiplate clutch arrangement (1) according to Claim 13, **characterized in that** the gearbox housing (66) is fastened by way of a housing element (65) to the drive unit (30), and the housing element (65) accommodates, on a radially inner circumferential region, a sealing element (26).

## Revendications

1. Dispositif d'embrayage à disques multiples (1), en particulier dispositifs d'embrayage à disques humides, pour une chaîne cinématique d'un véhicule automobile pour le transfert de couple entre un élément de sortie (31) d'une unité d'entraînement (30) et une boîte de vitesses (40) de la chaîne cinématique, comprenant un premier agencement d'embrayage à disques (50), pouvant tourner autour d'un axe de rotation A, au premier agencement d'embrayage à disques (50) étant associé un premier arbre d'entrée de boîte de vitesses associé (41) avec une denture (17) pour le transfert d'un couple du premier agencement d'embrayage à disques (50) au premier arbre d'entrée de boîte de vitesses (41), le premier arbre d'entrée de boîte de vitesses (41) étant supporté à rotation au moyen d'un palier pilote (13) sur l'élément de sortie (31) de l'unité d'entraînement (30), le premier agencement d'embrayage à disques (50) pouvant être actionné par le biais d'un premier agencement d'actionnement associé (45) et le premier agencement d'embrayage à disques (50) étant en liaison de manière solidaire en rotation au moyen d'une partie de bride (3) avec l'unité d'entraînement (30), le premier agencement d'embrayage à disques (50) étant supporté radialement et axialement, au moyen d'un premier palier (4) et d'un deuxième palier (5) qui sont espacés axialement l'un de l'autre, sur le premier arbre d'entrée de boîte de vitesses (41), **caractérisé en ce que** le premier palier (4) et le deuxième palier (5) sont positionnés dans la direction axiale entre le palier pilote (13) et la denture (17) du premier arbre d'entrée de boîte de vitesses (41).

2. Dispositif d'embrayage à disques (1) selon la revendication 1, **caractérisé en ce que** le premier palier (4) peut recevoir des forces radiales et/ou des forces axiales et le deuxième palier (5) peut recevoir des forces radiales et/ou des forces axiales.

3. Dispositif d'embrayage à disques (1) selon l'une quelconque des revendications précédentes, **caractérisé en ce qu'**une bague de palier extérieure (4a) du premier palier (4) et une bague de palier extérieure (5a) du deuxième palier (5) sont connectées de manière solidaire en rotation à la partie de bride (3).

4. Dispositif d'embrayage à disques (1) selon l'une quelconque des revendications précédentes, **caractérisé en ce qu'**une bague de palier intérieure (4b) du premier palier (4) et une bague de palier intérieure (5b) du deuxième palier (5) sont connectés de manière solidaire en rotation au premier arbre d'entrée de boîte de vitesses (41).

5. Dispositif d'embrayage à disques (1) selon l'une quelconque des revendications précédentes, **caractérisé en ce que** le premier palier (4) et le deuxième palier (5) sont fixés à la partie de bride (3) et au premier arbre d'entrée de boîte de vitesses (41) dans au moins une direction axiale au moyen d'au moins un élément de fixation (7 ; 8 ; 9).

6. Dispositif d'embrayage à disques (1) selon l'une quelconque des revendications précédentes, **caractérisé en ce que** le premier agencement d'embrayage à disques (50) est en liaison, au moyen d'un amortisseur de torsion (15) qui comprend une masse primaire (38) et une masse secondaire (39) pouvant tourner à l'encontre de la force d'un accumulateur d'énergie (36), avec l'élément de sortie (31) de l'unité d'entraînement (30).

7. Dispositif d'embrayage à disques (1) selon la revendication 6, **caractérisé en ce que** la partie de bride (3) et la masse secondaire (39) de l'amortisseur de torsion (15) sont connectées l'une à l'autre de manière solidaire en rotation au moyen d'une denture (47).

8. Dispositif d'embrayage à disques (1) selon l'une quelconque des revendications précédentes, **caractérisé en ce que** le premier palier (4) et le deuxième palier (5) sont en liaison avec un espace d'embrayage (12) et sont lubrifiés avec un milieu visqueux (14) présent dans l'espace d'embrayage (12).

9. Dispositif d'embrayage à disques (1) selon l'une quelconque des revendications précédentes, **caractérisé en ce que** le premier agencement d'embrayage à disques (50) peut être actionné au moyen d'un premier agencement d'actionnement (45) qui est réalisé sous forme pneumatique ou hydraulique ou électromécanique.

10. Dispositif d'embrayage à disques (1) selon l'une quelconque des revendications précédentes, **caractérisé en ce que** le dispositif d'embrayage à disques (1) comprend un deuxième agencement d'embrayage à disques (55) avec un deuxième arbre d'entrée de boîte de vitesses associé (44) et un deuxième agencement d'actionnement associé (49), lesquels sont disposés concentriquement par rapport à l'axe de rotation A.

11. Dispositif d'embrayage à disques (1) selon la revendication 10, **caractérisé en ce que** le deuxième agencement d'actionnement (49) est réalisé sous forme hydraulique ou pneumatique ou électromécanique.

12. Procédé de montage d'un dispositif d'embrayage à disques (1) selon l'une quelconque des revendications 1 à 11, dans une chaîne cinématique, en particulier dans une chaîne cinématique d'un véhicule utilitaire, **caractérisé en ce que** le premier agencement d'embrayage à disques (50) ou le premier agencement d'embrayage à disques (50) et le deuxième agencement d'embrayage à disques (55) qui est/sont supporté(s) au moyen du premier palier (4) et du deuxième palier (5) sur le premier arbre d'entrée de boîte de vitesses (41), est prémonté sur la boîte de vitesses (40), le premier agencement d'actionnement (45) ou le premier et le deuxième agencement d'actionnement (45 ; 49) étant prémontés axialement entre le premier agencement d'embrayage à disques (50) ou le premier agencement d'embrayage à disques (50) et le deuxième agencement d'embrayage à disques (50 ; 55) et la boîte de vitesses (40).

13. Procédé de montage d'un dispositif d'embrayage à disques (1) selon la revendication 12, **caractérisé en ce que** la boîte de vitesses (40) est fixée à un boîtier de boîte de vitesses (66) sur l'unité d'entraînement (30), la partie de bride (3) étant connectée au moyen d'une denture (47) à l'élément de sortie (31) de l'unité d'entraînement (30) ou à l'amortisseur de torsion (15).

14. Procédé de montage d'un dispositif d'embrayage à disques (1) selon la revendication 13, **caractérisé en ce que** le boîtier de boîte de vitesses (66) est fixé au moyen d'un élément de boîtier (65) à l'unité d'entraînement (30) et l'élément de boîtier (65) reçoit un élément d'étanchéité (26) au niveau d'une région périphérique radialement interne.
